# EUROPEAN PATENT SPECIFICATION

(11) **EP 1 029 738 B1**
(45) Date of publication and mention of the grant of the patent: **04.04.2007**
(21) Application number: 00830065.9
(22) Date of filing: 28.01.2000
(51) Int. Cl.: B60Q 1/56

(54) **Motor-vehicle lamp, for uses such as number plate illumination or turn indicator**
Kfz-Lampe zur Beleuchtung des Kennzeichenschildes oder Richtungsanzeige
Lampe de véhicule pour l'éclairage de la plaque d'immatriculation ou l'indication de direction

(30) Priority: 15.02.1999 IT TO990111
(43) Date of publication of application: 23.08.2000
(73) Proprietor: C.R.F. SOCIETA' CONSORTILE PER AZIONI, 10043 Orbassano (TO) (IT)
(72) Inventor: Perlo, Piero, 12048 Sommariva Bosco (Cuneo) (IT); Bigliati, Claudia, 13039 Trino (Vercelli) (IT); Farina, Silvia, C.R.F. Societa Consortile Azioni, 10043 Orbassano (Torino) (IT); Repetto, Piermario, 10145 Torino (IT)
(74) Representative: Notaro, Giancarlo

(56) References cited:
- EP-A- 0 587 501
- DE-A1- 1 480 568
- GB-A- 2 322 932
- US-A- 5 067 057

## Description

The present invention relates to a lamp for motor vehicles, which may be used in particular for number-plate illumination or as a turn indicator and is designed to illuminate an area which is located immediately adjacent to the lamp and extends for a considerable distance on either side of the lamp, the said lamp comprising a light source, a dish associated to the source, and a transparent element set in front of the dish.

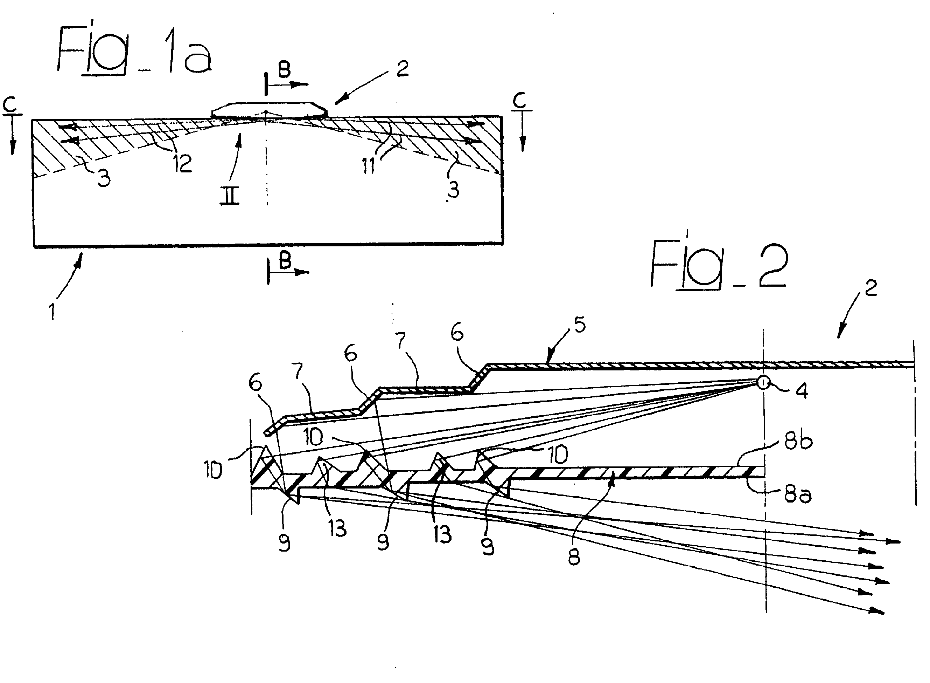

Figures 1a, 1b and 1c of the annexed drawings are schematic representations of a rear number plate of a motor vehicle and of the corresponding illumination lamp, and render the problems linked to the design of lamps of this type immediately evident.

With reference in particular to Figure 1a, the reference number 1 indicates, as a whole, a motor-vehicle number plate of a rectangular shape, the sides set horizontally being longer than the sides set vertically, with a lamp 2 for illumination of the number plate set immediately above the number plate itself. It may be readily understood that, as a result of the arrangement as described above, a lamp made according to the conventional art is not able to illuminate the two extreme top corners of the number plate, i.e., the areas shown hatched and designated by 3 in Figure 1a. For this reason, according to the known art it is necessary to use two lamps for illuminating the number plate, with a consequent increase in the costs for manufacture and assembly of the structure. Figures 1b and 1c correspond to cross sections according to the lines B-B and C-C of Figure 1. Figure 1c in particular highlights the fact that the number plate 1 may not be flat, but, instead, curved according to the profile of the vehicle bodywork in the area in which the number plate is located. This renders lighting-up of the extreme side areas of the number plate even more difficult.

The purpose of the present invention is to overcome the problems referred to above, using relatively simple and inexpensive means.

In order to achieve the above purpose, the subject of the invention is a lamp of the type indicated at the start of the present description, characterized in that the aforementioned transparent element has, at least at each one of its end portions, a set of internal and external prisms operating by total internal reflection (TIR), which are arranged, respectively, on the inner surface and the outer surface of the transparent element and are operatively associated together in pairs, the prisms of each pair being slightly staggered with respect to one another in such a way that each external prism is able to deflect both the light rays reflected by the dish and the light rays that come directly from the source and are deflected by the respective internal prism, the light coming from the external prisms being directed, according to a sensibly reduced angle with respect to the general plane of the transparent element.

Owing to the above characteristic, each end portion of the lamp is able to illuminate the side area of the number plate that is furthest away itself. In this way, a correct illumination of the number plate is achieved using a single lamp of relatively small size which is set at the centre of the number plate. In addition, the TIR prisms are able to meet the lighting requirements according to current standards and regulations by just operating on the portion of light that reaches them directly from the source (typically, a filament lamp).

The staggering of the external prism with respect to the internal prism of each pair of prisms means that the external prism is able to receive both the light rays coming from the source and deflected by the internal prism, and the light rays coming from the source and deflected by the dish. In addition, the adjacent pairs of internal and external prisms must be set at a certain distance apart in order to prevent them obscuring one another with respect to the light coming directly from the light source. For this reason, in order to exploit to the full the cone of direct light emission, between adjacent pairs of internal and external prisms are preferably set additional internal prisms designed to deflect the light coming from the source.

Of course, although the preferred embodiment which will be illustrated hereinafter refers to the application of the invention to a lamp for illuminating the number plate of a motor vehicle, the teachings that lie at the basis of the present invention may be used for other lighting devices, for instance for making a turn indicator for motor vehicles. The latter devices are set at the corners of the bodywork of the motor vehicle and need to give rise to an extremely wide-angled cone of light in order to illuminate also the areas immediately adjacent to the lamp and located on either side of the lamp.

The invention will now be described with reference to the attached drawings, which are provided purely as a non-limiting example and in which:
Figure 1a is a schematic front view of a rear number plate of a motor vehicle equipped with a lamp according to the invention;
Figure 1b is a cross section taken according to the line B-B of Figure 1a;
Figure 1c is a cross-sectional view according to the line C-C of Figure 1;
Figure 2 is a cross-sectional view at an enlarged scale of the detail indicated by the arrow II in Figure 1; and
Figure 3 is a view at enlarged scale of a detail of Figure 2 according to a possible variant.

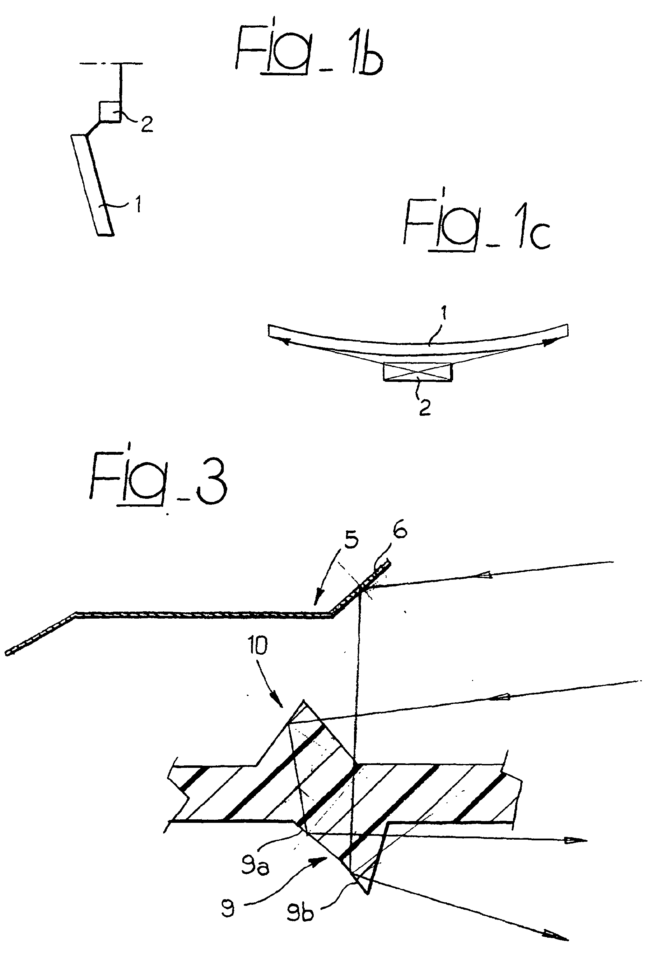

With reference to Figure 2, the lamp 2 according to the invention comprises a light source 4 represented by an incandescent lamp of any known type, which is illustrated only schematically in the drawing. For the same reason, the drawing does not illustrate the lamp-supporting means, which are connected to the body of the lamp. The lamp includes a dish 5 made up of a plurality of reflecting surfaces 6 arranged in a step-wise fashion according to an inclination such as to reflect the light rays coming from the light source 4 substantially downwards (with respect to the drawings). The reflecting portions 6 are linked together by supporting portions 7 which are inactive in so far as they are substantially arranged according to planes that are set radially with respect to the light source 4.

Located facing the dish 5 is a transparent element 8 (for example, made of plastic material) having an external surface 8a and an internal surface 8b. The drawings do not illustrate in detail the area of connection between the transparent element 8 and the body of the lamp, in that the said connection may be made in any known way. These constructional details have not been illustrated in so far as, taken by themselves, they do not fall within the sphere of the invention and in so far as their elimination from the drawings makes the latter more readily and easily understandable.

The transparent element 8 has a plurality of pairs of external prisms 9 and internal prisms 10, which are, respectively, arranged on the outer surface 8a and on the inner surface 8b at least at each end of the transparent element 8, which presents an elongated rectangular shape. As is clearly illustrated in Figure 2, the prisms 9 and 10 of each pair are staggered with respect to one another in such a way that each external prism 9 is able to deflect both the light rays coming from the dish 5 and the light rays coming from the respective internal prism 10 according to directions presenting a flattened angle, i.e., a very small angle with respect to the general plane of the transparent element 8. As a result of this characteristic, the left-hand end portion (see Figure 1a) of the lamp 2 is able to send light rays 11 that illuminate the top right-hand corner of the number plate, whilst the extreme right-hand portion of the lamp 2 is able to send light rays 12 which illuminate the top left-hand corner of the number plate.

As is also evident from Figure 2, the adjacent pairs of internal prisms 10 and external prisms 9 must be at a certain distance apart in order to prevent a given internal prism 10 from shadowing the subsequent internal prism 10 with respect to the light rays coming directly from the source 4. In addition, there are constructional limitations which prevent internal prisms 10 from being made with a height greater than a predetermined value. As a consequence of these factors and in order to exploit to the full the cone of light emitted directly by the light source 4, between adjacent pairs of internal prisms 10 and external prisms 9, additional internal prisms 13 are set so that they deflect the light coming directly from the source 4 also in this case according to directions presenting a substantially flattened angle, i.e., forming a small angle with respect to the general plane of the transparent element 8.

Figure 3 illustrates a variant in which each external prism 9 has two surfaces 9a and 9b, which have different inclinations, and the first of which is designed to deflect the light coming from the respective internal prism 10, whilst the second of which is designed to deflect the light coming from the dish 5.

Thanks to the characteristics illustrated above, the problems which were discussed at the start of this description are solved with simple and inexpensive means. Of course, the transparent element 8 may also have a conformation that is not plane, but is slightly curved, so as to obtain optimal illumination even in the case where the number plate has the curved shape illustrated in Figure 1c.

Obviously, without prejudice to the principle of the invention, the details of construction and the embodiments may also vary widely with respect to what is herein described and illustrated purely to provide an example, without thereby departing from the scope of the present invention as defined by the appended claims.

## Claims

1. A lamp for motor vehicles which may be used in particular for number-plate illumination or as a turn indicator and is designed to illuminate an area which is located immediately adjacent to the lamp and extends for a considerable distance on either side of the lamp, the said lamp (2) comprising a light source (4), a dish (5) associated to the source (4) and a transparent element (8) set in front of the dish (5),
**characterized in that** said transparent element (8) has, at least at each one of its end portions, a set of internal and external prisms (10, 9) operating by total internal reflection (TIR), which are arranged, respectively, on the inner surface (8b) and the outer surface (8a) of the transparent element (8) and are operatively associated together in pairs, the prisms (10, 9) of each pair being slightly staggered with respect to one another in such a way that each external prism (9) is able to deflect both the light rays reflected by the dish (5) and the light rays that come directly from the source and are deflected by the respective internal prism (10), the light coming from the external prisms (9) being directed, according to a sensibly reduced angle with respect to the general plane of the transparent element (8).

2. A lamp according to Claim 1, **characterized in that** between adjacent pairs of internal and external prisms (10, 9) are set additional internal prisms (13) designed to deflect the light coming directly from the source (4).

3. A lamp according to Claim 2, **characterized in that** the dish (5) comprises a series of inclined surfaces (6) arranged in a step-wise fashion linked together by supporting portions (7), which are substantially set radially with respect to the light source (4).

4. A lamp according to Claim 1, **characterized in that** the aforesaid external prisms (9) have two surfaces (9a; 9b) with different inclinations, the first of which is designed to deflect the light coming from the respective internal prism (10), and the second of which is designed to deflect the light coming from the dish (5).

## Patentansprüche

1. Lampe für Kraftfahrzeuge, die besonders zur Beleuchtung eines Kennzeichenschildes oder als eine Richtungsanzeige verwendet werden kann und konstruiert ist, um ein Gebiet, welches sich direkt anschließend um die Lampe befindet und sich über eine beachtliche Entfernung auf jeder Seite der Lampe erstreckt, zu beleuchten, wobei die Lampe (2) eine Lichtquelle (4), einen Teller (5), der mit der Quelle (4) verbunden ist, und ein transparentes Element (8), welches vor den Teller (5) gesetzt ist, aufweist,
**dadurch gekennzeichnet, dass** das transparente Element (8) zumindest an jedem seiner Endabschnitte ein Set von inneren und äußeren Prismen (10, 9) hat, die durch totale innere Reflexion (TIR) funktionieren, die auf der inneren Oberfläche (8b) und der äußeren Oberfläche (8a) des transparenten Elements (8) angeordnet sind und paarweise wirksam miteinander verbunden sind, wobei die Prismen (10, 9) jedes Paares in Bezug zueinander leicht versetzt sind in einer Art, dass jedes äußere Prisma (9) in der Lage ist, sowohl die Lichtstrahlen, die durch den Teller (5) reflektiert werden, als auch die Lichtstrahlen, die direkt von der Quelle kommen, abzulenken, und abgelenkt werden durch das jeweilige innere Prisma (10), wobei das von den äußeren Prismen (9) kommende Licht entsprechend einem vernünftig verringerten Winkel gerichtet wird in Bezug zu der normalen Ebene des transparenten Elements (8).

2. Lampe nach Anspruch 1, **dadurch gekennzeichnet, dass** zwischen anschließenden Paaren innerer und äußerer Prismen (10, 9) zusätzliche innere Prismen (13) gesetzt werden, ausgelegt, um das direkt von der Quelle (4) kommende Licht abzulenken.

3. Lampe nach Anspruch 2, **dadurch gekennzeichnet, dass** der Teller (5) eine Reihe geneigte, stufenweise angeordnete, miteinander durch unterstützende Abschnitte (7) verbundene Oberflächen (6) umfasst, welche im Wesentlichen strahlenförmig in Bezug zu der Lichtquelle (4) eingerichtet werden.

4. Lampe nach Anspruch 1, **dadurch gekennzeichnet, dass** die vorher besprochenen äußeren Prismen (9) zwei Oberflächen (9a; 9b) mit unterschiedlichen Neigungen haben, die erste, die konstruiert ist, um das von dem jeweiligen inneren Prisma (10) kommende Licht zu brechen, und die zweite, die konstruiert ist, um das von dem Teller (5) kommende Licht zu brechen.

## Revendications

1. Lampe pour véhicules à moteur, qui peut être utilisée en particulier pour l'éclairage de la plaque d'immatriculation ou en tant que clignotant, et est conçue pour éclairer une zone qui est située de manière immédiatement adjacente à la lampe et s'étend sur une distance considérable de chaque côté de la lampe, ladite lampe (2) comprenant une source de lumière (4), une coupelle (5) associée à la source (4) et un élément transparent (8) placé en face de la coupelle (5),
**caractérisée en ce que** ledit élément transparent (8) possède, au moins au niveau de chacune de ses parties d'extrémité, un ensemble de prismes internes et externes (10, 9) opérant par réflexion interne totale (TIR), qui sont agencés, respectivement, sur la surface interne (6b) et la surface externe (8a) de l'élément transparent (8) et sont associés de manière opérante ensemble par paires, les prismes (10, 9) de chaque paire étant légèrement décalés l'un par rapport à l'autre de sorte que chaque prisme externe (9) peut dévier à la fois les rayons lumineux réfléchis par la coupelle (5) et les rayons lumineux qui viennent directement de la source et sont réfléchis par le prisme interne (10) respectif, la lumière venant des prismes externes (9) étant dirigée selon un angle sensiblement réduit par rapport au plan général de l'élément transparent (8).

2. Lampe selon la revendication 1, **caractérisée en ce qu'**entre les paires adjacentes des prismes internes et externes (10, 9), on place des prismes internes supplémentaires (13) conçus pour dévier la lumière venant directement de la source (4).

3. Lampe selon la revendication 2, **caractérisée en ce que** la coupelle (5) comprend une série de surfaces inclinées (6) agencées en degrés, reliées ensemble par des parties de support (7) qui sont sensiblement placées radialement par rapport à la source de lumière (4).

4. Lampe selon la revendication 1, **caractérisée en ce que** les prismes externes (9) mentionnés précédemment ont deux surfaces (9a ; 9b) avec des inclinaisons différentes, dont la première est conçue pour dévier la lumière venant du prisme interne (10) respectif, et la seconde est conçue pour dévier la lumière venant de la coupelle (5).
